Europäisches Patentamt

European Patent Office

Office européen des brevets

(19)

(11) Veröffentlichungsnummer: **0 231 784**
A1

# (12) EUROPÄISCHE PATENTANMELDUNG

(21) Anmeldenummer: 87100488.3

(22) Anmeldetag: 16.01.87

(51) Int. Cl.³: **E 02 F 3/96**
E 02 F 3/40, E 02 F 5/08

(30) Priorität: 06.02.86 DE 3603675

(43) Veröffentlichungstag der Anmeldung:
12.08.87 Patentblatt 87/33

(84) Benannte Vertragsstaaten:
CH FR GB IT LI SE

(71) Anmelder: Hackmack, Alfred, Dr.
Am Deich 30
D-2095 Obermarschacht(DE)

(72) Erfinder: Hackmack, Alfred, Dr.
Am Deich 30
D-2095 Obermarschacht(DE)

(54) **Als Erdbewegungsgerät ausgebildete Kombination von einer Fräseinrichtung und einem Behälter.**

(57) Die Erfindung betrifft ein Erdbewegungsgerät, ausgebildet als eine Kombination von einer Fräseinrichtung und einem Behälter als selbstfahrendes Gerät oder als Anbaugerät an Bagger, Frontlader und ähnlichen Trägergeräten. Der Behälter kann ein Tieflöffel oder eine Ladeschaufel (5) sein. Das Gerät ist mit zwei Fräswalzen (1) ausgerüstet, die im stumpfen Winkel zueinander stehen und mittig an einem Halter (18), der mit dem Behälter verbunden ist, gelagert sind. Es erfolgt sowohl außen als auch innen ein Freischnitt durch die Fräswalzen. Dadurch ist es möglich, das Gerät beim Aushub von Gräben im Weichfels einzusetzen. Das Gerät kann mit Abstützrollen (8) und einer Entleerungsschnecke im Behälter ausgerüstet werden.

Fig. 1

Croydon Printing Company Ltd.

EP 0 231 784 A1

1. Als Erdbewegungsgerät ausgebildete Kombination von einer Fräseinrichtung und einem Behälter.

Die Erfindung betrifft eine Kombination von einer Fräseinrichtung und einem Behälter, wobei die Fräseinrichtung und der Behälter im Verhältnis zueinander so ausgebildet sind, daß das durch die Fräse gelöste Material von dieser in den Behälter gefördert wird.

In der DE-OS 28 33 658 ist die Kombination von einer Fräseinrichtung und einem Behälter beschrieben. Dieses Gerät hat den Nachteil, daß mit ihm nur verfestigtes Material an der Erdoberfläche gelockert und gegraben werden kann. Es können keine Gräben im Fels gefräst und das Material dann mit dem Behälter aus dem Graben herausbefördert werden.

Es ist die Aufgabe dieser Erfindung, eine Behälter-Fräseinrichtungskombination zu schaffen, mit der Gräben im Weichfels gefräst und das gefräste Material im Behälter gesammelt und mittels eines Trägergerätes, das mit einem Ausleger versehen ist, aus dem Graben herausbefördert werden.

Die Lösung der Aufgabe erfolgt erfindungsgemäß mit dem im Anspruch 1 dargestellten Gerät. Weitere Merkmale der Erfindung sind Gegenstand der Unteransprüche 2 bis 8. Es ist vorteilhaft, wenn der Behälter entweder die Form eines Tieflöffels oder einer Ladeschaufel hat.

Folgende Vorteile sind gegeben: Dadurch, daß die Fräswalzen nur einseitig in der Mitte gelagert sind und breiter sind als der Behälter, sowie in der Mitte ein Freischnitt erfolgt, kann das erfindungsgemäße Gerät, angebaut am Ausleger eines Baggers, Gräben im Fels ausheben. Ein Grabenaushub im Weichfels kann ohne Aufbruchgeräte wenn überhaupt, nur mit sehr starken, d.h. teuren Baggern erfolgen. Wenn Bagger mit dem Felsfräslöffel ausgerüstet werden, so besteht der Vorteil, daß für diese Arbeiten jetzt kleinere, billigere Bagger eingesetzt werden können. Die Leistungsfähigkeit von Baggern wird durch den Felsfräslöffel weit
nach oben verschoben. Im Vergleich zu dem zusätzlichen Einsatz eines Baggers mit Hydraulikhammer bestehen abgesehen
von dem Kostenvorteil weiter folgende Vorteile: Der Boden
wird fein zerkleinert. Er kann also für die Rückfüllung verwandt und er kann verdichtet werden. Es werden wie bei dem
Einsatz einer Grabenfräse glatte Grabenwände und eine gerade ebene Sohle ohne Nacharbeit erzielt. Da mit dem Fräslöffel sehr genau gearbeitet werden kann, wird auch nicht mehr
Boden gelockert, als unbedingt für die Rohrverlegung erforderlich ist, im Gegensatz zu der Arbeit mit dem Hydraulikhammer, bei der sich Lockerungen in den Randbezirken nicht
vermeiden lassen. Ein weiterer Vorteil in der Arbeit gegenüber dem Hydraulikhammer ist auch der, daß keine Risse in
dem umgebenden Gestein entstehen, was insbesondere in Städten zu Gefahren führen kann. Bei Arbeiten in Städten liegt
der Vorteil aber vor allen Dingen darin, daß kein Lärm und
keine Erschütterungen entstehen. Ein weiterer Vorteil ist
die Schonung des Baggers und damit geringere Reparaturkosten und längere Lebensdauer. Jeder Unternehmer weiß, wie
stark ein Bagger darunter leidet, wenn er im harten Boden
oder im Weichfels immer an der Grenze seiner Leistungsfähigkeit gefahren wird. Wenn dieser Bagger mit einem Felslöffel
ausgerüstet ist, so hat der Bagger nur noch die Aufgabe, den
Löffel zu halten. Die eigentliche Arbeit wird mit dem Fräslöffel gemacht.

Für Unternehmer, die nur hin und wieder in Fels Gräben ausheben müssen, ist es vorteilhaft, wenn sie das erfindungsgemäße Gerät als preisgünstiges Anbaugerät für Bagger und
Baggerlader erwerben können. Wenn Unternehmer laufend in
felsigem Gelände arbeiten, ist es vorteilhafter, wenn das
erfindungsgemäße Gerät fest an einem Trägergerät installiert
ist und mit diesem eine Einheit bildet. Eine Abstütz-Tiefenverstelleinrichtung kann sowohl beim Grabenaushub als auch bei Straßenfräsarbeiten vorteilhaft sein. Wenn beim Grabenfräsen die unten am Behälter angebrachten Rollen der Abstützeinrichtung auf der gefrästen Fläche abgestützt werden, so ergibt sich damit erstens die Möglichkeit, die Frästiefe durch das Kippen des Löffels zu regulieren und zweitens werden durch das Abstützen die Erschütterungen, die beim Fräsen auftreten, aufgefangen und nicht auf den Ausleger und das Gerät übertragen. Beim Einsatz des erfindungsgemäßen Gerätes für Straßenfräsarbeiten wird die 4-Rollen-Abstütz-Tiefenverstelleinrichtung, bei der frei um die Antriebsachse der Fräswalze schwingende scherenförmige Streben, die an einem Ende mit einer Spindel verbunden sind, an einem Zusatzhalter am Gerät angebracht. Durch diese Abstütz-Tiefenverstelleinrichtung wird eine ständig gleichbleibende Frästiefe gewährleistet.

An den äußeren Seiten der Fräswalzen können Verbreiterungsstücke angebracht werden, die es einerseits ermöglichen, daß mit dem selben Felsfräslöffel verschieden breite Gräben ausgehoben werden können und andererseits den Felsfräslöffel auch einsetzbar machen für Profilierungsarbeiten im Tunnel- und Stollenbau. Im Tunnelbau ist es auch vorteilhaft, wenn in dem Behälter eine Entleerungsschnecke eingesetzt wird, weil bei beengten Raumverhältnissen dann eine Entleerung des Behälter in ein seitlich danebenstehendes Fahrzeug erfolgen kann, ohne daß der Bagger oder Frontlader zu schwenken braucht. Je nach Art des zu grabenden Materials und Anordnung der Meisselhalter auf den Fräswalzen kann es vorteilhaft sein, Schleuderbleche anzubringen. Es ist weiter vorteilhaft, wenn Fräseinrichtung und Behälter trennbar gestaltet sind, weil dann die Fräseinrichtung auch ohne Behälter eingesetzt werden kann, z.B. bei Beraubungs- oder Profilierungsarbeiten im Tunnel oder an Felswänden.

Ein Ausführungsbeispiel der Erfindung ist in der Zeichnung dargestellt und wird im folgenden näher beschrieben:

Fig. 1 zeigt die Seitenansicht des Gerätes, ausgerüstet mit einer Abstütz-Tiefenverstelleinrichtung für Straßenfräsen, ausgebildet als Anbaugerät für Bagger.
Fig. 2 zeigt die Aufsicht des Gerätes.

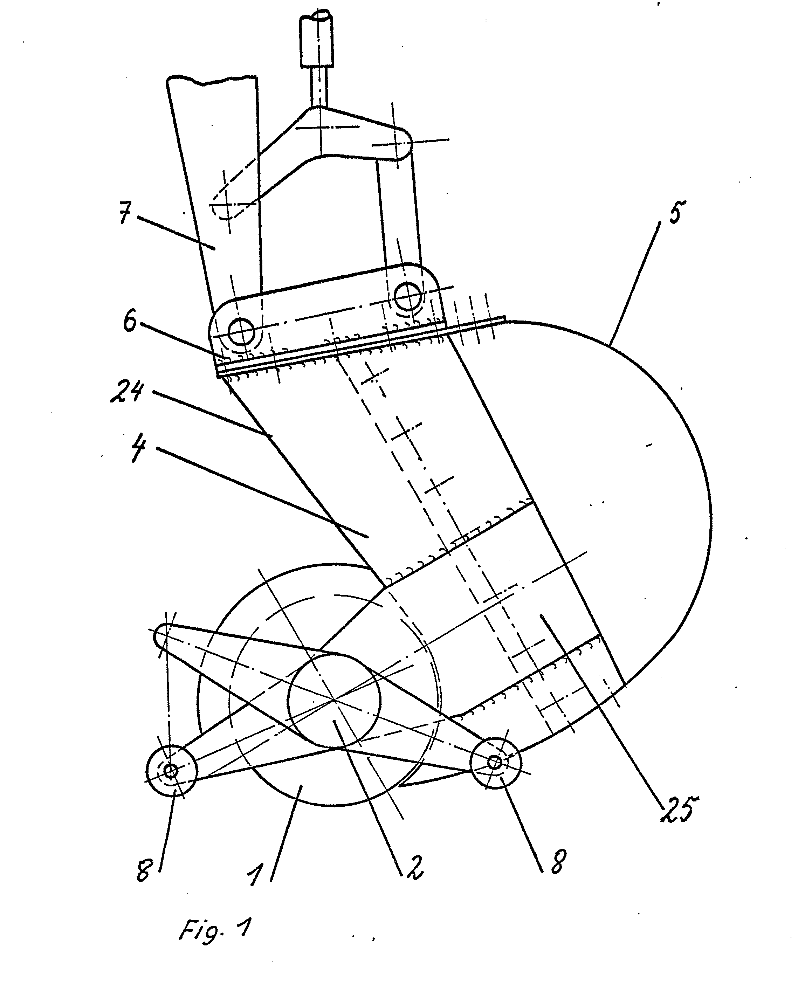

Die Fig. 1 zeigt die Fräswalze (1) ausgerüstet mit einem Hydraulikmotor (2). Sie ist angebracht an einem waagerecht liegenden Querhalter (3) und einem senkrechten Halter (4), an dem der Behälter (5) angesetzt ist. Auf dem Halter befindet sich die Anbauplatte (6) für den Ausleger des Baggers (7). An einem außen am senkrechten Halter (4) angebrachten Zusatzhalter (25) ist eine Abstütz-Tiefenverstelleinrichtung mit Abdeckhaube und 4 Rollen (8) angebracht für den Einsatz des Gerätes für Straßenfräsarbeiten. Anstelle von dieser 4-Rollenabstützung kann eine 2-Rollenabstützung, die nur aus einem Halter und zwei Rollen besteht, direkt unter dem Halter (3) angebracht werden für den Einsatz des Gerätes beim Grabenaushub.

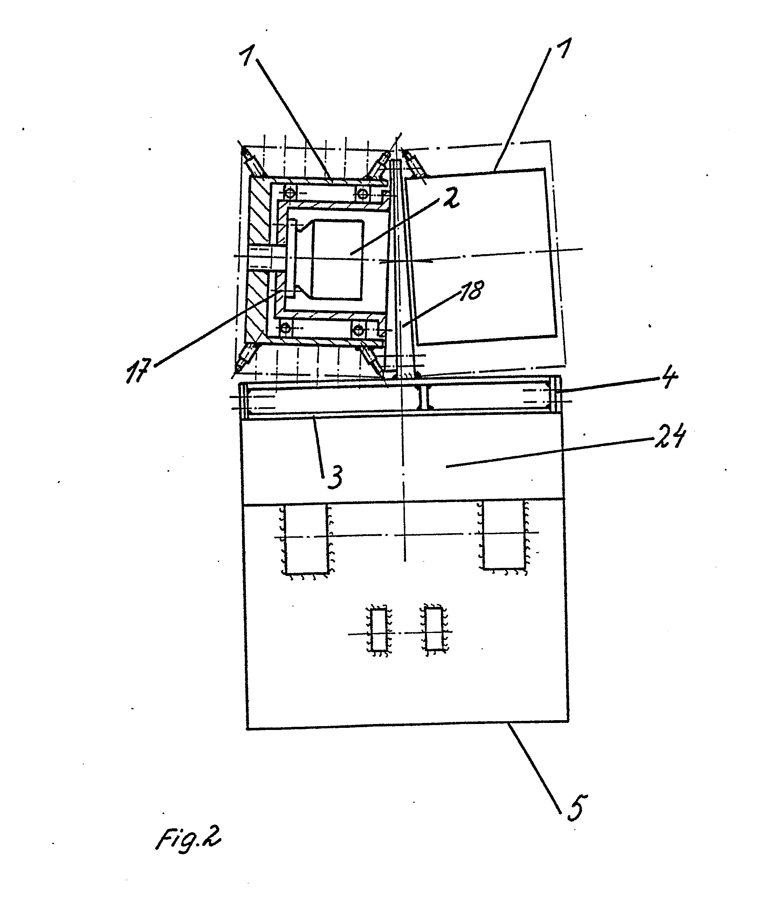

Die Fig. 2 zeigt die zwei im stumpfen Winkel zueinanderliegenden Fräswalzen (1), die von den in ihnen liegenden Hydraulikmotoren (2) angetrieben werden. Die Hydraulikmotoren sind befestigt an einem Rohrstück (17), auf dem die Fräswalzen (1) gelagert sind. Beide Rohrstücke werden gehalten durch einen in der Mitte der Walzen angebrachten Halter (18), der verbunden ist mit dem senkrecht liegenden Halter (4) über einen waagerecht liegenden Querhalter (3). Durch die Entleerungsöffnung (24) wird das Material durch Kippen des Behälters aus dem Behälter entfernt.

Dr. Alfred Hackmack
Am Deich 30 **0231784**
2095 Obermarschacht

ANSPRÜCHE

1. Erdbewegungsgerät, das besteht aus einer Kombination von
einer Fräseinrichtung (1, 2, 17, 18) und einem Behälter (5),
wobei die Fräseinrichtung und der Behälter im Verhältnis zueinander so ausgebildet sind, daß das durch die Fräse gelöste Material von dieser in den Behälter gefördert wird,
dadurch gekennzeichnet, daß in bzw. an dem Behälter (5) oder
einem Rahmen (3, 4), an dem der Behälter befestigt ist,
etwa in der Mitte vorn ein Halter (18) angebracht ist, der
nach vorn vor den Behälter reicht und an dem vor dem Behälter links und rechts je eine Fräswalze (1) im stumpfen Winkel angebracht ist, wobei diese Fräswalzen so breit sind,
daß die äußeren Meissel einen Freischnitt für den Behälter
herstellen und wobei die Meissel an der Innenseite der Fräswalzen so eng zusammenstehen, daß auch hier ein Freischnitt
erfolgt.

2. Gerät nach Anspruch zu 1 dadurch gekennzeichnet, daß es ausgebildet ist als Anbaugerät für Bagger, Baggerlader, Frontlader und andere Erdbewegungsgeräte (6, 7).

3. Gerät nach Anspruch zu 1 dadurch gekennzeichnet, daß es ausgebildet ist als selbstfahrendes Gerät und mit dem Trägergerät eine Einheit bildet.

4. Gerät nach Anspruch zu 1 bis 3 dadurch gekennzeichnet, daß
an der Kombination Fräse - Behälter eine Abstütz-Tiefenverstelleinrichtung angebracht ist (8).

5. Gerät nach Anspruch zu 1 bis 4 dadurch gekennzeichnet, daß
die Fräs-Behälterkombination so ausgebildet ist, daß beide
Teile voneinander getrennt und die Fräse mit dem Trägergerät und der Behälter mit dem Trägergerät als selbständige
Geräte zu benutzen sind.

- 2 -

6. Gerät nach Anspruch zu 1 bis 5 dadurch gekennzeichnet, daß an den Seiten der Fräswalze Verbreiterungswalzenstücke angebracht werden.

7. Gerät nach Anspruch zu 1 bis 6 dadurch gekennzeichnet, daß auf der Fräswalze nicht nur Fräsmeissel angebracht sind sondern zusätzlich auch Schleuderbleche.

8. Gerät nach Anspruch zu 1 bis 7 dadurch gekennzeichnet, daß im Behälter eine Schnecke angebracht ist.

9. Gerät nach Anspruch zu 1 bis 8 dadurch gekennzeichnet, daß der Behälter als Löffel für Erdbewegungsgeräte ausgebildet ist (5).

Fig. 1

0231784

Fig.2

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 139 856 (F. GHIRONI) <br> * Ansprüche 1-6; Figuren 1,6 * | 1,8 | E 02 F 3/96 <br> E 02 F 3/40 <br> E 02 F 5/08 |
| A | DE-A-1 756.180 (W. SCHUMANN) <br> * Ansprüche 1-7; Figuren 1-4 * | 1,8 | |
| A | US-A-2 585 117 (A.G. GURRIES) <br> * Spalte 1, Zeile 50 - Spalte 2, Zeile 50; Figuren 1-3 * | 1 | |
| A | DE-A-3 207 104 (W. STOLTEFUSS et al.) <br> * Ansprüche 1-4; Figuren 1-5 * | 1,2,5, 9 | |
| A | EP-A-0 207 232 (K. BAUER et al.) <br> * Zusammenfassung; Figuren 1-3 * | 1,5 | RECHERCHIERTE SACHGEBIETE (Int. Cl.4) |
| A | FR-B-2 419 894 (ETS. EMILY S.A.) <br> * Ansprüche 1-4; Figuren * | 1,8 | E 02 F |
| A | FR-A-2 399 373 (ETS. EMILY S.A.) <br> * Figuren 1-5 * | 1,8 | |

Der vorliegende Recherchenbericht wurde für alle Patentansprüche erstellt.

| Recherchenort | Abschlußdatum der Recherche | Prüfer |
|---|---|---|
| DEN HAAG | 24-04-1987 | ANGIUS P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82